# EUROPEAN PATENT APPLICATION

(11) **EP 3 751 725 A1**
(43) Date of publication of application: **16.12.2020**
(21) Application number: 20177331.4
(22) Date of filing: 29.05.2020
(51) Int. Cl.: H02P 7/12, G01K 7/42

(54) **CONTROLLER FOR DIRECT CURRENT SHUNT MOTOR AND MOTOR UNIT**

(30) Priority: 12.06.2019 JP 2019109553
(71) Applicant: Kabushiki Kaisha Toyota Jidoshokki, Kariya-shi, Aichi 448-8671 (JP)
(72) Inventor: YAMADA, Takefumi, Kariya-shi, Aichi 448-8671 (JP)
(74) Representative: TBK

(57) **Abstract**

A controller (50) for a direct current shunt motor (20) is provided. The controller is configured to control the direct current shunt motor that includes a field coil (21) and an armature (22) that are connected in parallel to each other. The controller includes a field coil temperature estimation unit (52) configured to estimate a temperature of the field coil from voltage (60) applied to the field coil or current (61) flowing through the field coil when the field coil is energized in a state where rotation of a rotor is stopped.

## Description

### BACKGROUND

### 1. Field

The present description relates to a controller for a direct current shunt motor and a motor unit.

### 2. Description of Related Art

A motor temperature estimation device described in Japanese Laid-Open Patent Publication No. 2017-103978 calculates loss of a motor. Then, the motor temperatures estimation device selects a phase in which current is flowing the most from three phases based on the rotor angle when the motor has been stopped and sets a conversion factor to have a value corresponding to the amount of current flowing in the selected phase. The motor temperature estimation device calculates an estimated temperature based on a value that is obtained by multiplying the loss of the motor by the conversion factor.

With a direct current shunt motor that does not include a temperature sensor, it is desirable that the temperature of a field coil be easy to estimate and, for example, the output characteristics be obtained as designed based on the estimated temperature.

### SUMMARY

It is an objective of the present description to provide a controller for a direct current shunt motor and a motor unit that allow the temperature of a field coil to be easily estimated.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a controller for a direct current shunt motor is provided. The controller is configured to control the direct current shunt motor that includes a field coil and an armature that are connected in parallel to each other. The controller includes a field coil temperature estimation unit configured to estimate a temperature of the field coil from voltage applied to the field coil or current flowing through the field coil when the field coil is energized in a state where rotation of a rotor is stopped.

In another general aspect, a motor unit is provided. The motor unit includes a direct current shunt motor that includes a field coil and an armature connected in parallel to each other, a drive circuit arranged between a direct-current power supply and the direct current shunt motor, and a controller configured to drive the drive circuit to energize the field coil and the armature with the direct-current power supply. The controller includes a field coil temperature estimation unit configured to estimate a temperature of the field coil from voltage applied to the field coil or current flowing through the field coil when the field coil is energized in a state where rotation of a rotor is stopped.

Other features and aspects will be apparent from the following detailed description, the drawings, and the claims.

### BRIEF DESCRIPTION OF THE DRAWINGS

Fig. 1 is a circuit diagram of a direct current shunt motor according to one embodiment.
Fig. 2 is a circuit diagram illustrating a current path.
Fig. 3 is a time chart showing operations of the present embodiment.
Fig. 4 is a diagram showing the relationship between applied voltage and temperature.
Fig. 5 is a diagram illustrating output maps associated with the temperature.
Fig. 6 is a diagram showing the relationship between armature current Ia and field current If.
Fig. 7 is a diagram showing the relationship between armature current Ia and field current If.
Fig. 8 is a diagram showing the relationship between applied voltage and field current.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

A direct current shunt motor that drives a hydraulic pump for an industrial vehicle according to one embodiment will now be described with reference to the drawings.

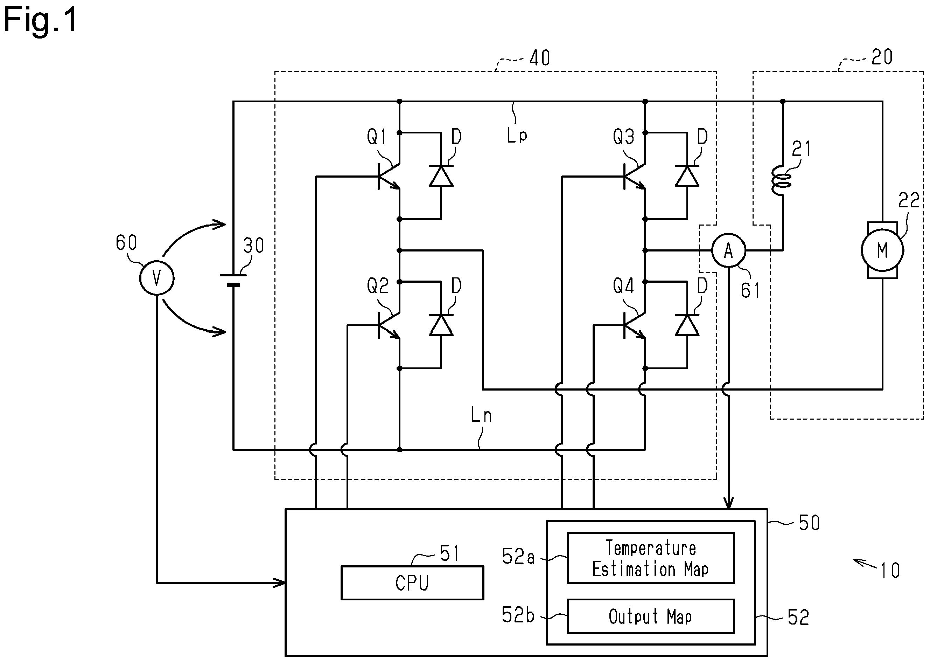

As shown in Fig. 1, a motor unit 10 includes a direct current shunt motor 20, a drive circuit 40, and a microcomputer 50. The direct current shunt motor 20 includes a field coil 21 and an armature 22. The drive circuit 40 energizes the field coil 21 and the armature 22 with a battery 30 that serves as a direct-current power supply. The microcomputer 50 serves as the controller for the direct current shunt motor 20.

The direct current shunt motor 20 includes the field coil 21 that corresponds to a stator and the armature 22 that corresponds to a rotor. In other words, the direct current shunt motor 20 includes the stator, which includes the field coil 21, and the rotor, which includes the armature 22. The field coil 21 and the armature 22 are connected in parallel to each other.

The drive circuit 40 is arranged between the direct current shunt motor 20 and the battery 30, which serves as the direct-current power supply. The drive circuit 40 includes four switching elements Q1, Q2, Q3, Q4. The positive electrode of the battery 30 is connected to a positive bus Lp, and the negative electrode of the battery 30 is connected to a negative bus Ln. The switching element Q1 and the switching element Q2 are connected in series between the positive and negative buses Lp, Ln. The switching element Q3 and the switching element Q4 are connected in series between the positive and negative buses Lp, Ln. The switching elements Q1, Q2, Q3, Q4 each employ a bipolar transistor. The switching elements Q1, Q2, Q3, Q4 are each connected in antiparallel to a diode D.

One end of the field coil 21 is connected to the positive bus Lp. The other end of the field coil 21 is connected to a location between the switching element Q3 and the switching element Q4.

One end of the armature 22 is connected to the positive bus Lp. The other end of the armature 22 is connected to a location between the switching element Q1 and the switching element Q2.

The bases of the switching elements Q1, Q2, Q3, Q4 are connected to the microcomputer 50. The microcomputer 50, which serves as the controller, drives the drive circuit 40 to energize the field coil 21 and the armature 22 with the battery 30, which serves as a direct-current power supply. Specifically, the microcomputer 50 adjusts the duty of the switching elements Q1, Q2, Q3, Q4 to chopper-control the direct current shunt motor. The switching element Q1 and the switching element Q2 perform reverse actions. Specifically, the switching element Q1 and the switching element Q2 are controlled so that when one of the switching element Q1 and the switching element Q2 is ON, the other one of the switching element Q1 and the switching element Q2 is OFF. The switching element Q3 and the switching element Q4 perform reverse actions. Specifically, the switching element Q3 and the switching element Q4 are controlled so that when one of the switching element Q3 and the switching element Q4 is ON, the other one of the switching element Q3 and the switching element Q4 is OFF.

A voltage sensor 60 detects the voltage of the battery 30 and sends a measurement result to the microcomputer 50.

A current sensor 61 is arranged between the field coil 21 and the switching elements Q3, Q4. The current sensor 61 detects current flowing through the field coil 21. A measurement result of the current sensor 61 is sent to the microcomputer 50.

As shown in Fig. 1, the microcomputer 50 includes a central processing unit (CPU) 51 and a storage unit 52 that includes a RAM, a ROM, and the like. The storage unit 52 stores various types of control programs. The microcomputer 50 may include dedicated hardware, such as an application specific integrated circuit (ASIC), that executes at least some of various types of processes. The microcomputer 50 may be configured as circuitry including one or more processors that run on a computer program, one or more dedicated hardware circuits such as an ASIC, or a combination thereof. The processor includes a CPU and a memory such as a RAM and a ROM. The memory stores program codes or instructions configured to cause the CPU to execute processes. The memory, or computer readable medium, includes any type of medium that is accessible by general-purpose computers and dedicated computers.

The storage unit 52 includes a temperature estimation map 52a and an output map 52b.

The microcomputer 50, which serves as the controller for the direct current shunt motor, controls the direct current shunt motor 20. A state where the rotation of the rotor is stopped will be referred to as a rotor rotation stopped state. The microcomputer 50 estimates the temperature of the field coil 21 from the voltage applied to the field coil 21 when the field coil 21 is energized in the rotor rotation stopped state.

Specifically, the CPU 51 that serves as a field coil temperature estimation unit estimates the temperature of the field coil 21 from the voltage applied to the field coil 21 when fixed current flows through the field coil 21 in the rotor rotation stopped state.

The operation will now be described.

First, control during a normal operation will be described.

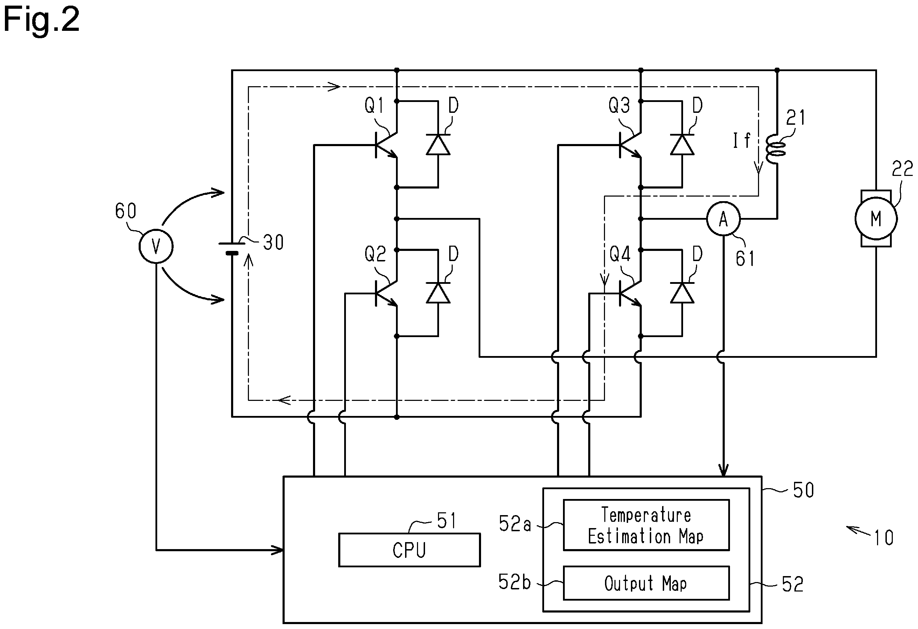

As shown in Fig. 2, during a normal operation, the CPU 51 adjusts the duty of the switching element Q4 (and switching element Q3) so that field current If flows in a path extending from the positive electrode of the battery 30 via the field coil 21 and the switching element Q4 to the negative electrode of the battery 30. The flow of field current If in this case is adjusted by adjusting the duty of the switching element Q4.

At the same time, the CPU 51 adjusts the duty of the switching element Q2 (and switching element Q1) so that armature current Ia flows in a path extending from the positive electrode of the battery 30 via the armature 22 and the switching element Q2 to the negative electrode of the battery 30. The flow of armature current Ia in this case is adjusted by adjusting the duty of the switching element Q2.

Torque T generated in this case is defined by field current If, armature current Ia, and coefficient k. Specifically, T = k × If × Ia is satisfied. The value of coefficient k is determined by the resistance component of the field coil 21, and the resistance component is a function of temperature. Thus, the value of coefficient k is determined in accordance with temperature. That is, even if the same value is obtained by multiplying field current If by armature current Ia (= If × Ia), a change in the temperature will change the value of coefficient k and vary the output torque. In this manner, when the temperature varies the torque such that the torque becomes greater than the required torque, efficiency will be reduced.

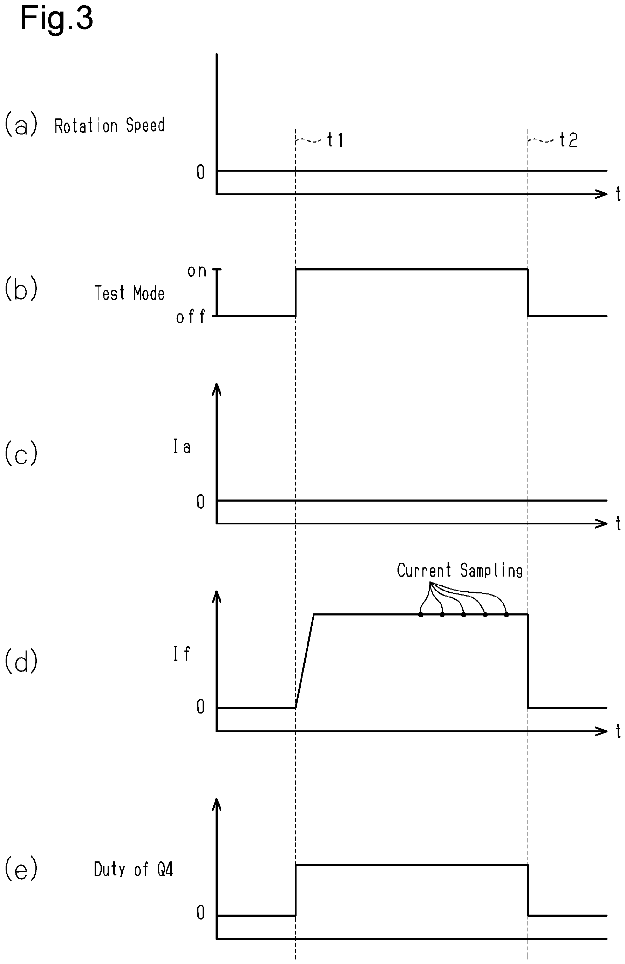

A process that estimates the temperature of the field coil 21 performed prior to the above normal operation will now be described. (a) in Fig. 3 is a time chart showing a rotation speed. (b) in Fig. 3 is a time chart showing ON/OFF of a test mode. (c) in Fig. 3 is a time chart showing armature current Ia. (d) in Fig. 3 is a time chart showing field current If. (e) in Fig. 3 is a time chart showing the duty of the switching element Q4.

In a rotor rotation stopped state shown in (a) in Fig. 3, specifically, in a state where the rotation speed is zero, the CPU 51 sets a test mode as shown in (b) in Fig. 3.

The CPU 51 produces a flow of predetermined field current If as shown in (d) in Fig. 3 and does not produce a flow of armature current Ia as shown in (c) in Fig. 3. Specifically, the CPU 51 produces a flow of fixed field current If by setting a desired duty for the switching element Q4 (and switching element Q3) as shown in (e) in Fig. 3. In the normal operation, for example, the armature current is approximately 100 A and the field current is several A to dozens of A. In the test mode, the field current is fixed to several A.

In the test mode, field current If flows in the same manner as field current If flowing in the normal operation shown in Fig. 2. Specifically, field current If in the process that estimates the temperature of the field coil 21 flows in the path extending from the positive electrode of the battery 30 via the field coil 21 and the switching element Q4 to the negative electrode of the battery 30.

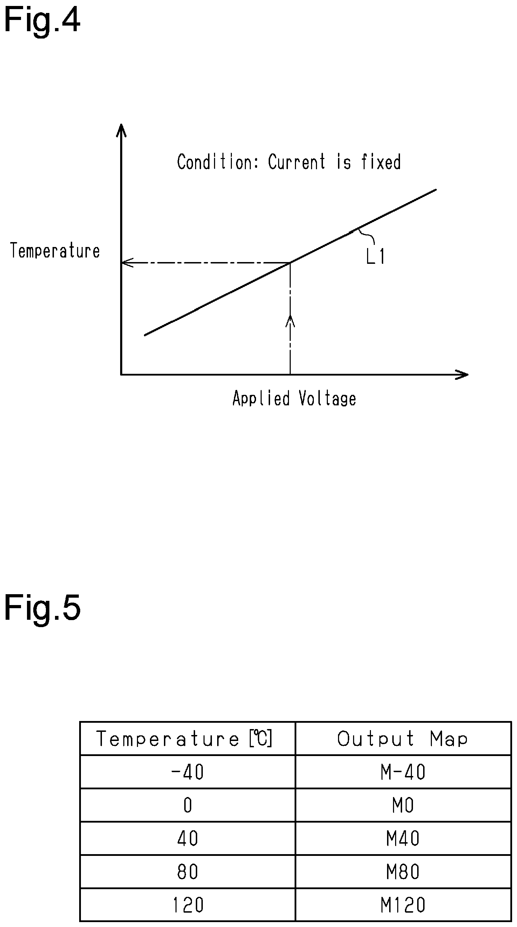

Fig. 4 shows the temperature estimation map 52a stored in the storage unit 52. In Fig. 4, the horizontal axis represents the applied voltage and the vertical axis represents the temperature. Fig. 4 shows a characteristic line L1 under a condition in which the current is fixed. The characteristic line L1 shows that temperature falls as the applied voltage decreases.

The CPU 51 uses the characteristic line L1 in the temperature estimation map in Fig. 4 to estimate the temperature of the field coil 21 from the applied voltage of the field coil 21.

As shown in (d) in Fig. 3, the CPU 51 samples multiple times the current flowing through the field coil 21 to estimate the temperature of the field coil 21.

Specifically, the voltage sensor 60 detects the voltage of the battery 30, and the current sensor 61 detects field current If. The CPU 51 adjusts the duty of the switching element Q4 to obtain desired field current If. In this case, the value of the voltage applied to the field coil 21 is obtained by multiplying the voltage of the battery 30 by the duty.

In this manner, in a state in which fixed current flows through the field coil 21, that is, after entering stable current state, the CPU 51 estimates the temperature of the field coil 21 from the voltage applied to the field coil 21. That is, the CPU 51 estimates the temperature of the field coil 21 from the voltage applied to the field coil 21 when fixed current flows through the field coil 21 in the rotor rotation stopped state.

A more specific description will be given below.

Temperature is one element that determines the characteristics of a direct current shunt motor. That is, the output characteristics of the direct current shunt motor differ between when the temperature is high and when the temperature is low.

In the present embodiment, the direct current shunt motor does not include a temperature sensor. Even in this case, the temperature of the direct current shunt motor can be estimated by producing a flow of field current as a test and measuring the applied voltage and the current.

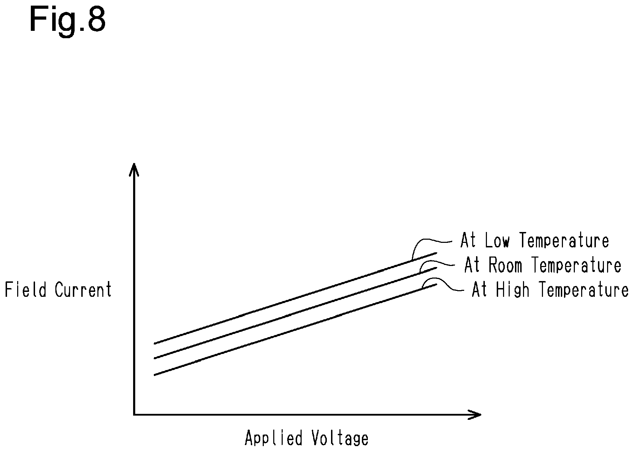

Fig. 8 shows the relationship between current flowing through the field coil 21 and the applied voltage at different temperatures. The relationship between the current flowing through the field coil 21 and the applied voltage will now be described.

Compared with a room temperature, more current flows at a low temperature. Compared with a room temperature, less current flows at a high temperature. This is because the resistance of a conductive wire changes in accordance with the temperature.

When the rotation speed of the direct current shunt motor is zero, the direct current shunt motor will not generate rotation when only field current flows. When the direct current shunt motor is stopped, a flow of a fixed test current for temperature estimation is produced for a short time (period from t1 to t2 in (a) in Fig. 3) to obtain the temperature. Specifically, the temperature is obtained by estimating the internal resistance value of the field coil 21 from the relationship between the present applied voltage and current.

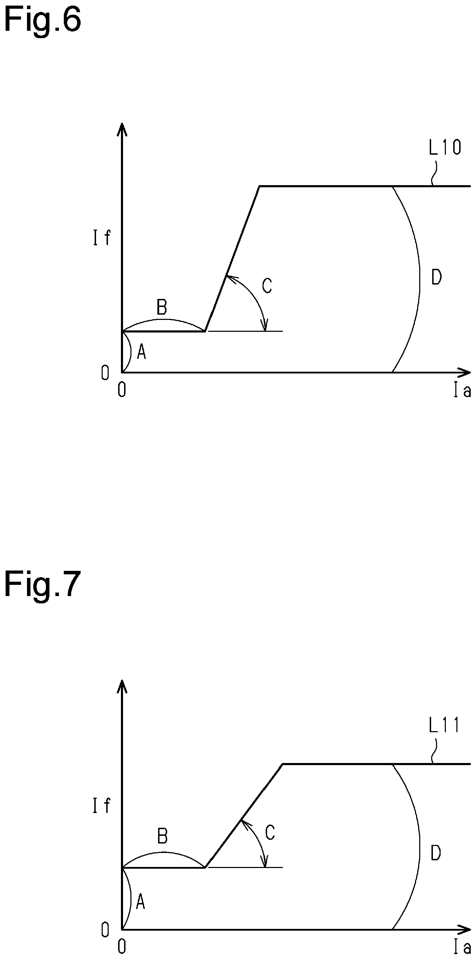

A system that has high controllability is configured without a temperature sensor by preparing various types of suitable values, that is, characteristic lines that correspond to temperature information obtained with the characteristic line L1 of Fig. 4. Specifically, output maps correspond to temperatures are prepared as shown in Fig. 5. Figs. 6, 7 show examples of the output maps.

In Figs. 6 and 7, the horizontal axis represents armature current Ia, and the vertical axis represents field current If. The output maps of Fig. 5 set the relationship between armature current Ia and field current If as shown in Fig. 6. As shown in Fig. 6, the relationship between armature current Ia and field current If is characterized by value A, value B, value C, and value D. At least one of value A, value B, value C, and value D in one output map differs from corresponding value A, value B, value C, and value D in another output map. Value A defines the magnitude of field current If when armature current Ia is small. Value B defines the range of armature current Ia when armature current Ia is small and field current If is fixed. Value C defines the rising angle of field current If when armature current Ia is moderate. Value D defines the magnitude of field current If when armature current Ia is large.

In Figs. 6 and 7, value A, value B, value C, and value D differ between characteristic line L10 of Fig. 6 and characteristic line L11 of Fig. 7.

Based on the temperature estimation result, the current can be limited and the direct current shunt motor can be stopped when the temperature of the motor becomes unexpectedly high.

In this manner, suitable values for the output of the direct current shunt motor are changed (output maps are prepared) in accordance with temperature estimation so that the direct current shunt motor can be operated at further efficient points. If the motor is operated continuously without a temperature sensor, the motor may be overheated. However, the present embodiment performs limitation control at high temperatures.

A conventional direct current shunt motor that does not include a temperature sensor does not execute control that performs corrections or imposes limitations when the temperature of the direct current shunt motor changes. Thus, the output of the motor does not undergo adjustments. However, the system is designed to have robustness in terms of safety and does not pose a problem. In this regard, the temperature estimation performed in the present embodiment allows for designing, which does not place significance on overly redundant safety, and further reduces differences in the output characteristics.

The above-described embodiment has the following advantages.
(1) The microcomputer 50, which serves as the controller for the direct current shunt motor, controls the direct current shunt motor 20 that includes the field coil 21 and the armature 22, which are connected in parallel to each other. The microcomputer 50 includes the CPU 51 that serves as a field coil temperature estimation unit and estimates the temperature of the field coil 21 from the voltage applied to the field coil 21 when the field coil 21 is energized in the rotor rotation stopped state. This allows for easy estimation of the temperature of the field coil 21.
(2) The motor unit 10 includes the direct current shunt motor 20, the drive circuit 40, and the microcomputer 50. The direct current shunt motor 20 includes the field coil 21 and the armature 22, which are connected in parallel to each other. The drive circuit 40 is arranged between the battery 30, which serves as a direct-current power supply, and the direct current shunt motor 20. The microcomputer 50, which serves as a controller, drives the drive circuit 40 to energize the field coil 21 and the armature 22 with the battery 30. The microcomputer 50 includes the CPU 51 that serves as a field coil temperature estimation unit and estimates the temperature of the field coil 21 from the voltage applied to the field coil 21 when the field coil 21 is energized in the rotor rotation stopped state. This allows for easy estimation of the temperature of the field coil 21.
(3) Specifically, the CPU 51 estimates the temperature of the field coil 21 from the voltage applied to the field coil 21 when a fixed current flows through the field coil 21 in the rotor rotation stopped state. This allows the temperature of the field coil 21 to be estimated while restricting heat generation.
(4) The CPU 51 samples multiple times the current flowing through the field coil 21 to estimate the temperature of the field coil 21.

Thus, the voltage applied to the field coil 21 is measured when the current flowing through the field coil 21 is stable. That is, voltage is measured in a steady state rather than a transient state. This allows for accurate estimation of the temperature from the resistance component alone using Ohm's law.

Instead, after performing sampling multiple times to obtain measurement values, the measurement values may be averaged or weighted when averaged. This further stabilizes measurement and improves accuracy. Weighting may be performed based on the likelihood (reliability) of the measurement results. Weighting may be set based on the deviation of measurement results from an actual temperature.

The present description is not limited to the above-described embodiment, but may be modified as follows.

The CPU 51, which serves as a field coil temperature estimation unit, estimates the temperature of the field coil 21 from the voltage applied to the field coil 21 when a fixed current flows through the field coil 21 in the rotor rotation stopped state. Instead, the CPU 51 may estimate the temperature of the field coil 21 from the current flowing through the field coil 21 when a fixed voltage is applied to the field coil 21 in the rotor rotation stopped state.

In other words, the microcomputer 50, which serves as the controller for the direct current shunt motor, may be configured to include the CPU 51 that estimates the temperature of the field coil 21 from the voltage applied to the field coil 21 or the current flowing through the field coil 21 when the field coil 21 is energized in the rotor rotation stopped state.

The CPU 51 may further sample multiple times the voltage applied to the field coil 21 or the current flowing through the field coil 21 to estimate the temperature of the field coil 21.

The voltage applied to the field coil 21 is obtained from the voltage of the battery 30 and the duty of the switching element Q4. Instead, a sensor that detects the voltage across two ends of the field coil 21 may be used to directly obtain the voltage applied to the field coil 21.

The direct current shunt motor drives a hydraulic pump for an industrial vehicle. Instead, the direct current shunt motor may be used for purposes other than driving of a hydraulic pump for an industrial vehicle.

Various changes in form and details may be made to the examples above without departing from the scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuit are combined differently, and/or replaced or supplemented by other components or their equivalents. The scope of the disclosure is not defined by the detailed description, but by the claims and their equivalents. All variations within the scope of the claims and their equivalents are included in the disclosure.

A controller for a direct current shunt motor is provided. The controller is configured to control the direct current shunt motor that includes a field coil and an armature that are connected in parallel to each other. The controller includes a field coil temperature estimation unit configured to estimate a temperature of the field coil from voltage applied to the field coil or current flowing through the field coil when the field coil is energized in a state where rotation of a rotor is stopped.

## Claims

1. A controller (50) for a direct current shunt motor (20), wherein the controller (50) is configured to control the direct current shunt motor (20) that includes a field coil (21) and an armature (22) that are connected in parallel to each other, the controller (50) comprising:
a field coil temperature estimation unit (51) configured to estimate a temperature of the field coil (21) from voltage applied to the field coil (21) or current flowing through the field coil (21) when the field coil (21) is energized in a state where rotation of a rotor is stopped.

2. The controller (50) according to claim 1, wherein the field coil temperature estimation unit (51) is configured to estimate the temperature of the field coil (21) from the voltage applied to the field coil (21) when a fixed current flows through the field coil (21) in the state where the rotation of the rotor is stopped.

3. The controller (50) according to claim 1, wherein the field coil temperature estimation unit (51) is configured to estimate the temperature of the field coil (21) from the current flowing through the field coil (21) when a fixed voltage is applied to the field coil (21) in the state where the rotation of the rotor is stopped.

4. The controller (50) according to any one of claims 1 to 3, wherein the field coil temperature estimation unit (51) is configured to estimate the temperature of the field coil (21) by sampling multiple times the voltage applied to the field coil (21) or the current flowing through the field coil (21).

5. A motor unit (10) comprising:
a direct current shunt motor (20) that includes a field coil (21) and an armature (22) connected in parallel to each other;
a drive circuit (40) arranged between a direct-current power supply (30) and the direct current shunt motor (20); and
a controller (50) configured to drive the drive circuit (40) to energize the field coil (21) and the armature (22) with the direct-current power supply (30),
wherein the controller (50) includes a field coil temperature estimation unit (51) configured to estimate a temperature of the field coil (21) from voltage applied to the field coil (21) or current flowing through the field coil (21) when the field coil (21) is energized in a state where rotation of a rotor is stopped.
